# EUROPÄISCHE PATENTANMELDUNG

(11) **EP 3 798 819 A1**
(43) Veröffentlichungstag der Anmeldung: **31.03.2021**
(21) Anmeldenummer: 19199259.3
(22) Anmeldetag: 24.09.2019
(51) Int. Cl.: G06F 8/36, G06F 8/75, G06F 11/36, G06N 3/08, G06N 20/00, G05B 19/05, G05B 19/042

(54) **ANWENDERUNTERSTÜTZUNG BEI DER PROGRAMMIERUNG EINES STEUERGERÄTS**

(71) Anmelder: Siemens Aktiengesellschaft, 80333 München (DE)
(72) Erfinder: Trenner, Thomas, 90766 Fürth (DE); Wieczorek, Michael, 91056 Erlangen (DE)

(57) **Zusammenfassung**

Zur kontextangepassten Anwenderunterstützung bei der Programmierung eines Steuergeräts werden mittels eines Kernmoduls (5) Kontextinformationen betreffend ein vorgegebenes Programmierungsziel erfasst und ein Modell (11) zur Wissensrepräsentation abhängig davon erzeugt und/oder verändert. Mittels eines Schnittstellenmoduls (3) wird eine Aktivität zur Programmierung des Steuergeräts eines Anwenders während einer Produktivphase erfasst. Mittels eines Verarbeitungsmoduls (4) wird abhängig von der Aktivität und dem Modell (11) ein Vorschlag erzeugt, wobei der Vorschlag mittels des Schnittstellenmoduls (3) wenigstens teilweise umgesetzt und/oder an den Anwender übermittelt wird.

## Beschreibung

Die vorliegende Erfindung betrifft ein computerimplementiertes Verfahren zur Anwenderunterstützung bei der Programmierung eines Steuergeräts, ein Computersystem zur Anwenderunterstützung bei der Programmierung eines Steuergeräts, ein Computerprogramm und ein computerlesbares Speichermedium.

Die Programmierung von umfangreichen oder komplexen Automatisierungssystemen beziehungsweise Automatisierungslösungen erfordert in zunehmendem Maße die Unterstützung von Anwendern bei der Entwicklung von Programmen für Steuergeräte, beispielsweise von SPS-Programmen.

Die Unterstützung eines SPS-Programmierers während der Entwicklung beschränkt sich bei bekannten Entwicklungsumgebungen darauf, dass bestimmte Funktionsbausteine oder Variablen angeboten werden. Diese Ansätze basieren beispielsweise auf statischen Codeanalysen und sind daher beispielsweise auf die Ergänzung von Variablenamen, Parametern oder Funktionsnamen beschränkt.

Vor diesem Hintergrund ist es eine Aufgabe der vorliegenden Erfindung, ein verbessertes Konzept zur Anwenderunterstützung bei der Programmierung eines Steuergeräts anzugeben, das einen höheren Automatisierungsgrad bei der Anwenderunterstützung bieten kann.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, Kontextinformationen, die ein vorgegebenes Programmierungsziel betreffen, zur Erzeugung beziehungsweise zum Trainieren eines Modells zur Wissensrepräsentation heranzuziehen und während einer Produktivphase der Programmierung des Steuergeräts basierend auf dem Modell Vorschläge zur Programmierung zu erzeugen und umzusetzen beziehungsweise anzubieten.

Gemäß einem unabhängigen Aspekt des verbesserten Konzepts wird ein computerimplementiertes Verfahren zur Anwenderunterstützung bei der Programmierung eines Steuergeräts angegeben. Mittels eines Kernmoduls werden Kontextinformationen betreffend ein vorgegebenes Programmierungsziel, insbesondere für das Steuergerät, erfasst. Mittels des Kernmoduls wird ein Modell zur Wissensrepräsentation abhängig von den Kontextinformationen erzeugt, insbesondere erzeugt und gespeichert, und/oder verändert, insbesondere trainiert. Mittels eines Schnittstellenmoduls wird eine Aktivität eines Anwenders während einer Produktivphase erfasst, wobei die Aktivität eine Aktivität zur Programmierung des Steuergeräts ist. Mittels eines Verarbeitungsmoduls wird abhängig von der Aktivität und dem Modell ein Vorschlag erzeugt und der Vorschlag wird mittels des Schnittstellenmoduls wenigstens teilweise umgesetzt und/oder an den Anwender übermittelt.

Bei dem Anwender, der auch als Entwickler, Programmierer oder Programmentwickler bezeichnet werden kann, handelt es sich um eine Person, welche die Programmierung des Steuergeräts wenigstens teilweise manuell durchführt.

Bei dem Steuergerät handelt es sich insbesondere um ein Steuergerät zur Steuerung wenigstens einer Maschine oder Anlage, beispielsweise um eine Steuerung eines Automatisierungssystems. Bei dem Steuergerät kann es sich insbesondere um ein Steuergerät zur speicherprogrammierbaren Steuerung beziehungsweise um eine speicherprogrammierbare Steuerung handeln.

Die Programmierung des Steuergeräts beinhaltet insbesondere die Entwicklung, beziehungsweise das Erzeugen oder Verfassen eines Programms, also eines Programmcodes oder Quellcodes für das Steuergerät.

Das vorgegebene Programmierungsziel kann beispielsweise gegeben sein durch einen Zweck oder eine Aufgabe, die durch die Programmierung des Steuergeräts beziehungsweise durch das entsprechende resultierende Programm erfüllt werden soll. Insbesondere beinhaltet das Programmierungsziel Informationen darüber, um welche Art von Programm es sich handelt, welche Art von Maschine, Anlage oder System mittels des Steuergeräts basierend auf dem Programm gesteuert werden soll und/oder weitere Eigenschaften, die das Programm nach dessen Fertigstellung aufweisen soll.

Bei dem Kernmodul, dem Verarbeitungsmodul und dem Schnittstellenmodul beziehungsweise, falls zutreffend, bei weiteren im Folgenden eingeführten Modulen handelt es sich insbesondere um Softwaremodule, also jeweils um eine funktionale Einheit von Computerprogrammen oder -funktionen.

Die Module können dabei beispielsweise auf einem oder mehreren, insbesondere verteilten, Computersystemen sein.

Das Schnittstellenmodul ist insbesondere dazu ausgelegt, direkt oder indirekt mit dem Anwender zu kommunizieren, beispielsweise über eine Benutzerschnittstelle und/oder über eine integrierte Entwicklungsumgebung, IDE.

Die Kontextinformationen können jegliche von dem Programmierungsziel abhängige oder das Programmierungsziel betreffende Informationen beinhalten.

Die Kontextinformationen können auch Nutzereingaben durch den Anwender oder einen weiteren Anwender oder Nutzerinformationen betreffend den Anwender oder den weiteren Anwender beinhalten.

Die Kontextinformationen können auch bekannte oder vorgegebene Vorgehensweisen bei der Programmierung eines Programms für das Steuergerät beinhalten, insbesondere sogenannte "Best Practices". Die Kontextinformationen können insbesondere projektspezifische, also aufgaben-, anwendungs- oder zweckspezifische Informationen beinhalten.

Zum Erfassen der Kontextinformation kann beispielsweise eine Nutzereingabe über das Schnittstellenmodul, beispielsweise über die Benutzerschnittstelle und das Schnittstellenmodul, oder über eine weitere Schnittstelle erfasst werden.Die Nutzereingabe kann über das Schnittstellenmodul oder die weitere Schnittstelle an das Kernmodul übermittelt werden.

Zum Erfassen der Kontextinformation kann das Kernmodul auch auf eine Datenbank oder ein Speicherelement zugreifen, insbesondere über die weitere Schnittstelle.

Unter einem Modell zur Wissensrepräsentation kann hier und im Folgenden insbesondere ein in Softwareform implementierter Algorithmus verstanden werden, der Wissen speichert, verarbeitet und/oder benutzt, um aus Eingabeinformationen oder Eingabedaten Ausgabeinformationen oder Ausgabedaten, insbesondere den Vorschlag, zu erzeugen.

Der Begriff "Wissen" ist dabei beispielsweise als Abgrenzung zu den Begriffen "Information" und "Daten" zu verstehen. Wissen kann beispielsweise als vernetzte Information verstanden werden. Im Gegensatz zu reinen Informationen stehen Wissensinhalte in einem definierten Kontext, sodass eine konkrete Nutzung des Wissens möglich ist.

Wissen kann insbesondere mittels eines Ablaufs zur Entstehung von Wissen definiert sein. So können einzelne Zeichen mittels einer Syntax zu einer Aussage angeordnet werden, um so Daten zu erzeugen. Aussagen oder Daten können mittels einer Semantik eine konkrete Bedeutung zugewiesen werden, um Informationen zu erzeugen. Um aus den Informationen Wissen zu erzeugen, werden diese, insbesondere mittels einer Pragmatik, mit Erfahrungen verknüpft. Dazu werden Informationen beispielsweise situationsabhängige, also kontextabhängige, Bedeutungen zugeordnet.

Das Modell zur Wissensrepräsentation kann insbesondere als Modell basierend auf künstlicher Intelligenz oder maschinellem Lernen ausgestaltet sein und insbesondere eines oder mehrere künstliche neuronale Netzwerke und/oder einen oder mehrere Graphen, insbesondere Wissensgraphen, auch als "Knowledge Graphen" bezeichnet, beinhalten.

Die Aktivität des Anwenders beinhaltet insbesondere während der Produktivphase vorgenommene Eingaben zum Erzeugen des Programms für das Steuergerät, insbesondere zum Erzeugen von Codebestandteilen des Programms für das Steuergerät.

Die Produktivphase entspricht dabei insbesondere einer Phase, während welcher der Anwender die Programmierung des Steuergeräts beziehungsweise das Erzeugen des Programmcodes für das Steuergerät wenigstens teilweise manuell durchführt.

Der Vorschlag kann beispielsweise einen Hinweis oder eine Empfehlung beinhalten, die beziehungsweise der mittels der Benutzerschnittstelle oder in sonstiger Form an den Anwender ausgegeben werden kann. Der Vorschlag kann auch eine Aktion beinhalten, sodass mittels des Vorschlags allein oder in Kombination mit einer weiteren Benutzereingabe oder einer Bestätigung durch den Anwender, ein Teil des Programms zur Steuerung des Steuergeräts wenigstens teilweise automatisch erzeugt, verändert, gelöscht und/oder ergänzt wird.

Dass der Vorschlag wenigstens teilweise umgesetzt wird, kann insbesondere derart verstanden werden, dass der Vorschlag unter einer Bedingung, beispielsweise einer Verifikation durch den Anwender, umgesetzt, also ausgeführt wird.

Durch das Verfahren nach dem verbesserten Konzept kann also eine kontextabhängige Unterstützung des Anwenders bei der Programmierung des Steuergeräts erfolgen.

Dabei wird Wissen aufgebaut, zur Erstellung des Vorschlags berücksichtigt und gegebenenfalls erweitert. Durch die Verwendung unterschiedlicher Wissenskategorien und/oder Wissensquellen und gegebenenfalls deren Kombination kann neues Wissen erzeugt und verwendet werden.

Insgesamt führt die kontextabhängige Unterstützung des Programmierers beispielsweise dazu, dass weniger irrelevante, unpassende oder falsche Vorschläge erzeugt werden, und dass komplexere Vorschläge angeboten werden können.

Dies führt in der Konsequenz zu einer schnelleren Programmierung und zu einer verbesserten Codequalität, insbesondere zu besser wartbaren Programmcodes.

Gemäß zumindest einer Ausführungsform des Verfahrens ist das Modell zur Wissensrepräsentation auf einem Speicherelement gespeichert oder wird mittels des Kernmoduls abhängig von den Kontextinformationen auf dem Speicherelement gespeichert.

Gemäß zumindest einer Ausführungsform ist das Steuergerät als speicherprogrammierbare Steuerung, SPS, ausgestaltet. Insbesondere handelt es sich bei dem Verfahren nach dem verbesserten Konzept dann um ein computerimplementiertes Verfahren zur Anwenderunterstützung bei der Programmierung einer SPS.

Gemäß zumindest einer Ausführungsform wird ein Quellcode oder Computerprogramm für das Steuergerät abhängig von dem Vorschlag manuell oder wenigstens teilweise automatisiert erzeugt.

Gemäß zumindest einer Ausführungsform enthält der Vorschlag einen Korrekturvorschlag oder einen Alternativvorschlag zur Programmierung des Steuergeräts und/oder einen Warnhinweis an den Anwender.

Gemäß zumindest einer Ausführungsform beinhaltet die Kontextinformation eine maschinen-, anlagen-, fertigungs- und/oder verfahrensbezogene Randbedingung oder Einschränkung. Davon können beispielsweise vorgegebene Parametergrenzen, Designvorgaben und/oder Inhalte von Design- oder Programmierrichtlinien umfasst sein.

Gemäß zumindest einer Ausführungsform enthalten die Kontextinformationen Randbedingungen oder Einschränkungen des Steuergeräts und/oder Nutzereingaben und/oder Informationen über ein historisches Nutzerverhalten und/oder Best Practices und/oder Projektspezifika betreffend das Programmierungsziel.

Gemäß zumindest einer Ausführungsform werden mittels des Kernmoduls Gewichte, also Gewichtungsfaktoren, eines künstlichen neuronalen Netzwerks, insbesondere eines tiefen neuronalen Netzwerks, DNN, oder eines faltenden neuronalen Netzwerks (englisch: "convolutional neural network"), CNN, abhängig von den Kontextinformationen erzeugt und/oder verändert, um das Modell zu erzeugen und/oder zu verändern.

Insbesondere enthält das Modell das neuronale Netzwerk, basiert auf dem neuronalen Netzwerk und/oder besteht aus dem neuronalen Netzwerk.

Gemäß zumindest einer Ausführungsform wird der Vorschlag mittels des Verarbeitungsmoduls abhängig von der Aktivität basierend auf dem neuronalen Netzwerk erzeugt, insbesondere abhängig von einer Ausgabe des neuronalen Netzwerks, wobei die Ausgabe des neuronalen Netzwerks von einer Eingabe für das neuronale Netzwerk abhängt und die Eingabe insbesondere von der Aktivität abhängt.

Gemäß zumindest einer Ausführungsform werden mittels des Kernmoduls Kanten eines Graphen abhängig von den Kontextinformationen erzeugt und/oder verändert, um das Modell zu erzeugen und/oder zu verändern.

Insbesondere enthält das Modell den Graphen, basiert auf dem Graphen oder besteht aus dem Graphen.

Der Graph kann beispielsweise als Wissensgraph, als Graph mit einer Ontologie oder als Graph mit Kanten, denen jeweils eine Semantik zugeordnet ist, ausgestaltet sein.

Gemäß zumindest einer Ausführungsform wird der Vorschlag mittels des Verarbeitungsmoduls abhängig von der Aktivität basierend auf dem Graphen erzeugt, insbesondere abhängig von einer Ausgabe des Graphen, wobei die Ausgabe des Graphen von einer Eingabe für den Graphen abhängt und die Eingabe insbesondere von der Aktivität abhängt.

Gemäß zumindest einer Ausführungsform wird während einer Erzeugungsphase, die insbesondere zeitlich vor der Produktivphase liegt, mittels des Kernmoduls ein Initialmodell zur Wissensrepräsentation abhängig von Initialinformationen der Kontextinformationen erzeugt. Das Initialmodell wird mittels des Kernmoduls während der Erzeugungsphase abhängig von weiteren Informationen der Kontextinformationen trainiert oder verändert, um das Modell zu erzeugen.

Das Erzeugen des Initialmodells entspricht insbesondere einem initialen Erzeugen des Modells, und das Trainieren des Initialmodells entspricht einem initialen Training des Modells.

Gemäß zumindest einer Ausführungsform wird das Modell mittels des Kernmoduls während der Produktivphase abhängig von der Aktivität und/oder abhängig von einer weiteren Aktivität des Anwenders verändert.

Die weitere Aktivität wird dabei insbesondere mittels des Kernmoduls und/oder des Schnittstellenmoduls erfasst.

Das Verändern des Modells während der Produktivphase kann als Online-Lernen, Lernern zur Laufzeit, Nachlernen oder verstärkendes Lernen bezeichnet werden.

Dadurch kann das Modell kontinuierlich verbessert werden und typisches oder aktuelles Nutzerverhalten kann besser berücksichtigt werden.

Gemäß zumindest einer Ausführungsform wird die Programmierung des Steuergeräts abhängig von dem Vorschlag angepasst.

Mit anderen Worten wird das Programm, beispielsweise manuell durch den Anwender und/oder wenigsten teilweise automatisch durch das Schnittstellenmodul und/oder die IDE, angepasst beziehungsweise verändert.

Gemäß zumindest einer Ausführungsform wird der Vorschlag mittels des Schnittstellenmoduls während der Produktivphase wenigstens teilweise umgesetzt und/oder an den Anwender übermittelt.

Dadurch kann eine Echtzeitunterstützung während der Programmierung, also während der Produktivphase, erreicht werden.

Gemäß einem weiteren unabhängigen Aspekt des verbesserten Konzepts wird ein Computersystem zur Anwenderunterstützung bei der Programmierung eines Steuergeräts angegeben. Das Computersystem weist ein Schnittstellenmodul sowie eine Recheneinheit mit einem Verarbeitungsmodul auf. Die Recheneinheit weist ein Kernmodul auf, das dazu ausgestaltet ist, Kontextinformationen betreffend ein vorgegebenes Programmierungsziel zu erfassen und ein Modell zur Wissensrepräsentation abhängig von den Kontextinformationen zu erzeugen und/oder zu verändern. Das Schnittstellenmodul ist dazu ausgestaltet, eine Aktivität eines Anwenders zur Programmierung des Steuergeräts während einer Produktivphase zu erfassen. Das Verarbeitungsmodul ist dazu ausgestaltet, abhängig von der Aktivität und dem Modell einen Vorschlag zu erzeugen und das Schnittstellenmodul ist dazu ausgestaltet, den Vorschlag wenigstens teilweise umzusetzen und/oder an den Anwender zu übermitteln.

Die Recheneinheit kann beispielsweise das Schnittstellenmodul beinhalten. Alternativ kann eine weitere Recheneinheit des Computersystems das Schnittstellenmodul beinhalten.

Gemäß zumindest einer Ausführungsform des Computersystems ist das Kernmodul dazu eingerichtet, Gewichte eines künstlichen neuronalen Netzwerks abhängig von den Kontextinformationen zu erzeugen und/oder zu verändern, um das Modell zu erzeugen und/oder zu verändern.

Gemäß zumindest einer Ausführungsform ist das Kernmodul dazu eingerichtet, Kanten eines Graphen abhängig von den Kontextinformationen zu erzeugen und/oder zu verändern, um das Modell zu erzeugen und/oder zu verändern.

Gemäß zumindest einer Ausführungsform ist das Kernmodul dazu eingerichtet, während einer Erzeugungsphase ein Initialmodell zur Wissensrepräsentation abhängig von Initialinformationen der Kontextinformationen zu erzeugen und das Initialmodell während der Erzeugungsphase abhängig von weiteren Informationen der Kontextinformationen zu trainieren, um das Modell zu erzeugen.

Gemäß zumindest einer Ausführungsform ist das Kernmodul dazu eingerichtet, das Modell während der Produktivphase abhängig von der Aktivität und/oder abhängig von einer weiteren Aktivität des Anwenders zu verändern.

Weitere Ausführungsformen des Computersystems nach dem verbesserten Konzept ergeben sich unmittelbar aus den verschiedenen Ausgestaltungsformen des Verfahrens nach dem verbesserten Konzept und umgekehrt. Insbesondere kann ein Computersystem nach dem verbesserten Konzept dazu eingerichtet oder programmiert sein, ein Verfahren nach dem verbesserten Konzept durchzuführen oder das Computersystem nach dem verbesserten Konzept führt ein Verfahren nach dem verbesserten Konzept durch.

Gemäß einem weiteren unabhängigen Aspekt des verbesserten Konzepts wird ein Computerprogramm mit Befehlen angegeben. Bei Ausführung des Computerprogramms durch ein Computersystem, insbesondere durch ein Computersystem nach dem verbesserten Konzept, veranlassen die Befehle das Computersystem dazu, ein Verfahren nach dem verbesserten Konzept durchzuführen.

Gemäß einem weiteren unabhängigen Aspekt des verbesserten Konzepts wird ein computerlesbares Speichermedium angegeben, auf welchem ein Computerprogramm nach dem verbesserten Konzept gespeichert ist.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von ihnen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: eine schematische Darstellung einer beispielhaften Ausführungsform eines Computersystems nach dem verbesserten Konzept, und
- FIG 2: eine schematische Darstellung einer weiteren beispielhaften Ausführungsform eines Computersystems nach dem verbesserten Konzept sowie ein Ablaufdiagramm einer beispielhaften Ausführungsform eines Verfahrens nach dem verbesserten Konzept.

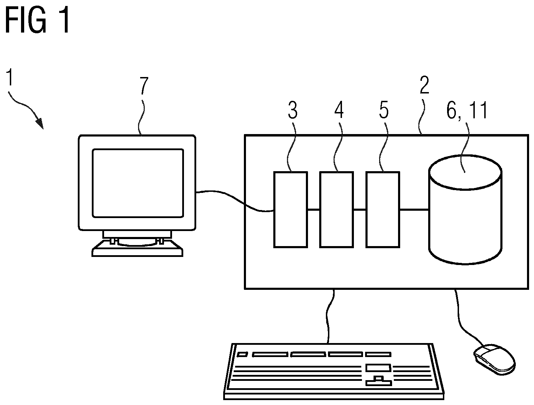

In FIG 1 ist eine schematische Darstellung einer beispielhaften Ausführungsform eines Computersystems 1 nach dem verbesserten Konzept dargestellt.

Das Computersystem 1 weist eine Recheneinheit 2 auf, die beispielsweise ein Schnittstellenmodul 3, ein mit dem Schnittstellenmodul 3 gekoppeltes Verarbeitungsmodul 4, ein mit dem Verarbeitungsmodul 4 gekoppeltes Kernmodul 5 sowie ein Speicherelement 6 aufweist, das mit dem Kernmodul 5 gekoppelt ist.

Die Recheneinheit 2 ist beispielsweise mit einer Benutzerschnittstelle 7 gekoppelt, insbesondere ist die Benutzerschnittstelle 7 mit dem Schnittstellenmodul 3 gekoppelt. Die Benutzerschnittstelle 7 kann Ein- und Ausgabegeräte, wie beispielsweise einen Monitor, eine Tastatur oder dergleichen, aufweisen.

Das Kernmodul 5 ist dazu ausgestaltet, Kontextinformationen betreffend ein vorgegebenes Programmierungsziel zur Programmierung eines Steuergeräts, beispielsweise einer speicherprogrammierbaren Steuerung, zu erfassen und abhängig von den Kontextinformationen ein Modell 11 zur Wissensrepräsentation zu erzeugen und auf dem Speicherelement 6 zu speichern.

Das Schnittstellenmodul 3 ist dazu ausgestaltet, eine Aktivität oder Eingabe eines Anwenders zur Programmierung des Steuergeräts während einer Produktivphase der Programmierung des Steuergeräts zu erfassen und das Verarbeitungsmodul 4 ist dazu eingerichtet, abhängig von der Aktivität und basierend auf dem Modell 11 einen Vorschlag zu erzeugen.

Das Schnittstellenmodul 3 ist dazu ausgestaltet, den Vorschlag wenigstens teilweise umzusetzen und/oder an den Anwender zu übermitteln.

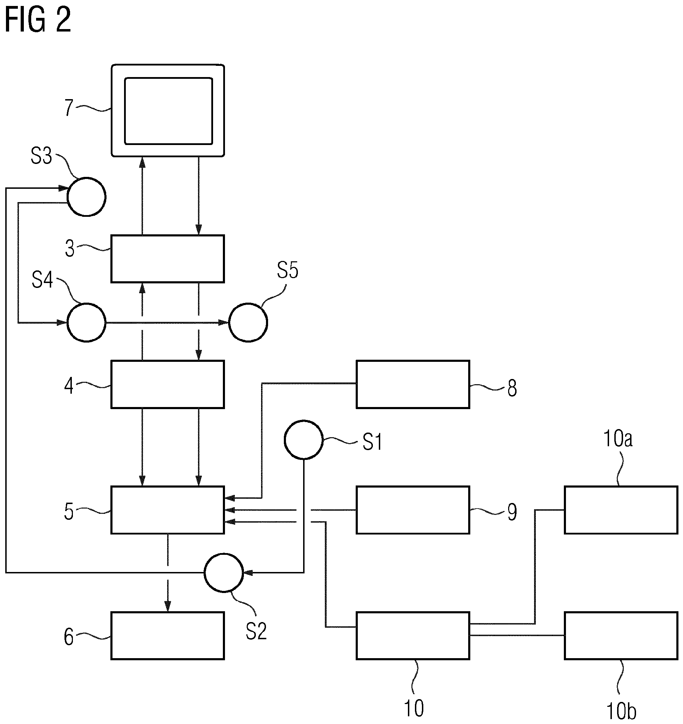

In FIG 2 ist eine weitere beispielhafte Ausgestaltungsform eines Computersystems 1 nach dem verbesserten Konzept schematisch dargestellt. Zudem sind Verfahrensschritte S1 bis S5 einer beispielhaften Ausführungsform eines Verfahrens nach dem verbesserten Konzept dargestellt.

Das in FIG 2 dargestellte Computersystem kann beispielsweise dem in FIG 1 dargestellten Computersystem entsprechen.

Die Funktion des Computersystems 1 wird im Folgenden anhand der beispielhaften Ausführungsform des Verfahrens nach dem verbesserten Konzept zur Anwenderunterstützung bei der Programmierung eines Steuergeräts mit Bezug auf FIG 2 genauer erläutert.

Im ersten Schritt S1 des Verfahrens erfasst das Kernmodul 5, beispielsweise über die Benutzerschnittstelle 7 und/oder das Schnittstellenmodul 3, Kontextinformationen, die ein Programmierungsziel betreffen.

Die Kontextinformationen können beispielsweise Nutzerinformationen 8, beispielsweise Nutzereingaben, nutzerspezifische Verhaltensweisen und/oder historische Daten betreffend einen Nutzer, beinhalten.

Die Kontextinformationen können auch vorgegebene Regeln 9, beispielsweise in Form von oder basierend auf Best Practices, beinhalten.

Zudem können die Kontextinformationen Projektspezifika, beispielsweise spezifische Informationen 10 bezüglich vorgegebener Randbedingungen oder Zieleigenschaften für das durch die Programmierung zu erzeugende SPS-Programm, beinhalten.

Die spezifischen Informationen 10 können beispielsweise Richtlinien 10a, insbesondere Design- oder Unternehmensrichtlinien, und/oder Informationen über ein Einsatzgebiet oder eine Anwendung des Steuergeräts, insbesondere hinsichtlich einer Hardwarekonfiguration 10b des Steuergeräts oder eines Systems, welches mittels des Steuergeräts gesteuert werden soll, beinhalten.

Während einer Erzeugungsphase des Verfahrens, insbesondere vor einer Produktivphase der Programmierung des Steuergeräts, wird mittels des Kernmoduls 5 abhängig von den erfassten Kontextinformationen in Schritt S2 des Verfahrens beispielsweise ein initiales Modell zur Wissensrepräsentation erzeugt. Ebenfalls während der Erzeugungsphase kann das Kernmodul 5 abhängig von den Kontextinformationen das initiale Modell trainieren, um das Modell 11 zu erzeugen und auf dem Speicherelement 6 zu speichern.

In Schritt S3 des Verfahrens wird während einer Produktivphase, also während der Programmierung des Steuergeräts durch den Anwender, eine Aktivität, beispielsweise ein aktuell erzeugter Codebestandteil, des Anwenders zur Programmierung des Steuergeräts mittels des Schnittstellenmoduls 3 erfasst.

Im Schritt S4 des Verfahrens erzeugt das Verarbeitungsmodul 4 abhängig von der Aktivität und basierend auf dem Modell 11 einen Vorschlag zur Anpassung oder zur Veränderung des aktuellen Codesegments. Das Kernmodul 5 kann mittels des Schnittstellenmoduls 3 den Vorschlag wenigstens teilweise automatisch umsetzen oder den Anwender dazu auffordern, den Vorschlag umzusetzen.

Im optionalen Schritt S5 des Verfahrens erfolgt eine Optimierung oder ein Nachlernen des Modells 11, also insbesondere eine Verbesserung des Modells 11. Dazu kann das Kernmodul 5 das Modell 11 während der Produktivphase abhängig von der Aktivität und/oder abhängig von einer weiteren Aktivität des Anwenders optimieren oder anpassen.

Das Modell 11 kann beispielsweise auf einem Wissensgraphen basieren. Zum Optimieren des Modells 11 kann das Kernmodul 5 beispielsweise Kanten des Wissensgraphen anpassen oder weitere Kanten des Graphen erzeugen.

Wie beschrieben, wird durch das verbesserte Konzept eine kontextabhängige Unterstützung eines Programmierers eines Steuergeräts, insbesondere eine SPS, ermöglicht.

Durch das verbesserte Konzept können insbesondere SPS-Programme innerhalb kürzerer Zeit korrekt und besser pflegbar erzeugt werden.

Insbesondere können beispielsweise Codesequenzen, wie Logikeinheiten, Code Snippets oder Codemuster in einem bestimmten Kontext, beispielsweise in einem bestimmten Automatisierungsumfeld, überprüft werden und das Modell basierend darauf verbessert werden.

Durch das verbesserte Konzept wird es ermöglicht, Codesequenzen in Bezug auf einen bestimmten Kontext zu analysieren, zu ergänzen oder beispielsweise auf Korrektheit zu prüfen.

Dazu bezieht das Verfahren beziehungsweise das Computersystem nach dem verbesserten Konzept beispielsweise zur Laufzeit sich dynamisch anpassendes globales Wissen ein.

Dem Anwender wird zum Entwicklungszeitpunkt eine begleitende Analyse seines Programmcodes und seines Programmierstils angeboten, um ihm zeitnah Hinweise bezüglich einer effizienteren Programmierung liefern zu können oder ihm Vorschläge hinsichtlich einer Refaktorisierung des Codes basierend auf dem Modell zur Wissensrepräsentation anzubieten.

Dadurch kann ein besser verständlicher, besser pflegbarer und/oder schnellerer Code erzeugt werden.

Als kontextabhängige Informationen können beispielsweise Programmiergewohnheiten des jeweiligen Anwenders, Best Practices der Programmierung, Programmierstandards oder Programmierrichtlinien oder konkrete Projektspezifika, beispielsweise Konfigurationen bezüglich fertigungstechnischer oder physikalischer Grenzen eingesetzter Anlagenteile, erfasst werden.

Das Wissen stammt insbesondere aus unterschiedlichen Quellen und kann auf unterschiedliche Arten generiert oder verbessert werden. Dazu können insbesondere Mechanismen des Machine Learning, beispielsweise tiefe neuronale Netzwerke, faltende neuronale Netzwerke, Knowledgegraphen oder regelbasierte Verfahren eingesetzt werden.

Durch das verbesserte Konzept können zum Zeitpunkt der Programmierung fertigungstechnische Einschränkungen wie beispielsweise Reglergrenzwerte automatisch im Programmkontext geprüft werden und/oder mitlernende Komponenten können beispielsweise potentiell fehlerhafte Programmteile erkennen und ergänzend konkrete Korrekturvorschläge erstellen.

Durch die Kombination unterschiedlicher Wissenskategorien kann neues verknüpftes Wissen erzeugt werden, welches während der Programmierung zusätzlich angereichert und mit Automatisierungsspezifika ergänzt werden kann.

### Bezugszeichenliste

- 1: Computersystem
- 2: Recheneinheit
- 3: Schnittstellenmodul
- 4: Verarbeitungsmodul
- 5: Kernmodul
- 6: Speicherelement
- 7: Benutzerschnittstelle
- 8: Nutzerinformationen
- 9: Regeln
- 10: Informationen
- 10a: Richtlinien
- 10b: Hardwarekonfiguration
- 11: Modell
- S1 bis S5: Verfahrensschritte

## Patentansprüche

1. Computerimplementiertes Verfahren zur Anwenderunterstützung bei der Programmierung eines Steuergeräts,
**dadurch gekennzeichnet, dass**
mittels eines Kernmoduls (5) Kontextinformationen betreffend ein vorgegebenes Programmierungsziel erfasst werden;
mittels des Kernmoduls (5) ein Modell (11) zur Wissensrepräsentation abhängig von den Kontextinformationen erzeugt und/oder verändert wird;
mittels eines Schnittstellenmoduls (3) eine Aktivität eines Anwenders zur Programmierung des Steuergeräts während einer Produktivphase erfasst wird;
mittels eines Verarbeitungsmoduls (4) abhängig von der Aktivität und dem Modell (11) ein Vorschlag erzeugt wird; und der Vorschlag mittels des Schnittstellenmoduls (3) wenigstens teilweise umgesetzt und/oder an den Anwender übermittelt wird.

2. Verfahren nach Anspruch 1,
**dadurch gekennzeichnet, dass**
mittels des Kernmoduls (5) Gewichte eines künstlichen neuronalen Netzwerks abhängig von den Kontextinformationen erzeugt und/oder verändert werden, um das Modell (11) zu erzeugen und/oder zu verändern.

3. Verfahren nach Anspruch 2,
**dadurch gekennzeichnet, dass**
der Vorschlag mittels des Verarbeitungsmoduls (4) abhängig von der Aktivität basierend auf dem neuronalen Netzwerk erzeugt wird.

4. Verfahren nach einem der Ansprüche 1 bis 3,
**dadurch gekennzeichnet, dass**
mittels des Kernmoduls (5) Kanten eines Graphen abhängig von den Kontextinformationen erzeugt und/oder verändert werden, um das Modell (11) zu erzeugen und/oder zu verändern.

5. Verfahren nach Anspruch 4,
**dadurch gekennzeichnet, dass**
der Vorschlag mittels des Verarbeitungsmoduls (4) abhängig von der Aktivität basierend auf dem Graphen erzeugt wird.

6. Verfahren nach einem der Ansprüche 1 bis 5,
**dadurch gekennzeichnet, dass**
während einer Erzeugungsphase mittels des Kernmoduls (5) ein Initialmodell zur Wissensrepräsentation abhängig von Initialinformationen der Kontextinformationen erzeugt wird; und das Initialmodell mittels des Kernmoduls (5) während der Erzeugungsphase abhängig von weiteren Informationen der Kontextinformationen trainiert wird, um das Modell (11) zu erzeugen.

7. Verfahren nach einem der Ansprüche 1 bis 6,
**dadurch gekennzeichnet, dass**
das Modell (11) mittels des Kernmoduls (5) während der Produktivphase abhängig von der Aktivität und/oder abhängig von einer weiteren Aktivität des Anwenders verändert wird.

8. Verfahren nach einem der Ansprüche 1 bis 7,
**dadurch gekennzeichnet, dass**
die Programmierung des Steuergeräts abhängig von dem Vorschlag durchgeführt und/oder angepasst wird.

9. Verfahren nach einem der Ansprüche 1 bis 8,
**dadurch gekennzeichnet, dass**
der Vorschlag mittels des Schnittstellenmoduls (3) während der Produktivphase wenigstens teilweise umgesetzt und/oder an den Anwender übermittelt wird.

10. Computersystem zur Anwenderunterstützung bei der Programmierung eines Steuergeräts,
**dadurch gekennzeichnet, dass**
das Computersystem (1) ein Schnittstellenmodul (3) sowie eine Recheneinheit (2) mit einem Verarbeitungsmodul (4) aufweist;
die Recheneinheit (2) ein Kernmodul (5) aufweist, das dazu ausgestaltet ist, Kontextinformationen betreffend ein vorgegebenes Programmierungsziel zu erfassen und ein Modell (11) zur Wissensrepräsentation abhängig von den Kontextinformationen zu erzeugen und/oder zu verändern;
das Schnittstellenmodul (3) dazu ausgestaltet ist, eine Aktivität eines Anwenders zur Programmierung des Steuergeräts während einer Produktivphase zu erfassen;
das Verarbeitungsmodul (4) dazu ausgestaltet ist, abhängig von der Aktivität und dem Modell (11) einen Vorschlag zu erzeugen; und
das Schnittstellenmodul (3) dazu ausgestaltet ist, den Vorschlag wenigstens teilweise umzusetzen und/oder an den Anwender zu übermitteln.

11. Computersystem nach Anspruch 10,
**dadurch gekennzeichnet, dass** das Kernmodul (5) dazu eingerichtet ist,
Gewichte eines künstlichen neuronalen Netzwerks abhängig von den Kontextinformationen zu erzeugen und/oder zu verändern, um das Modell (11) zu erzeugen und/oder zu verändern; und/ oder
Kanten eines Graphen abhängig von den Kontextinformationen zu erzeugen und/oder zu verändern, um das Modell (11) zu erzeugen und/oder zu verändern.

12. Computersystem nach einem der Ansprüche 10 oder 11, **dadurch gekennzeichnet, dass** das Kernmodul (5) dazu eingerichtet ist,
während einer Erzeugungsphase ein Initialmodell zur Wissensrepräsentation abhängig von Initialinformationen der Kontextinformationen zu erzeugen; und
das Initialmodell während der Erzeugungsphase abhängig von weiteren Informationen der Kontextinformationen zu trainieren, um das Modell (11) zu erzeugen.

13. Computersystem nach einem der Ansprüche 10 bis 12,
**dadurch gekennzeichnet, dass**
dass das Kernmodul (5) dazu eingerichtet ist, das Modell (11) während der Produktivphase abhängig von der Aktivität und/oder abhängig von einer weiteren Aktivität des Anwenders zu verändern.

14. Computerprogramm mit Befehlen, die bei Ausführung des Computerprogramms durch ein Computersystem das Computersystem dazu veranlassen, ein Verfahren nach einem der Ansprüche 1 bis 9 durchzuführen.

15. Computerlesbares Speichermedium, auf welchem ein Computerprogramm nach Anspruch 14 gespeichert ist.
